# EUROPEAN PATENT SPECIFICATION

(11) **EP 3 839 453 B1**
(45) Date of publication and mention of the grant of the patent: **14.06.2023**
(21) Application number: 19219079.1
(22) Date of filing: 20.12.2019
(51) Int. Cl.: G01J 3/02, G01N 21/49

(54) **MEASURING ARRANGEMENT FOR AN OPTICAL SPECTROMETER**
MESSANORDNUNG FÜR EIN OPTISCHES SPEKTROMETER
AGENCEMENT DE MESURE POUR SPECTROMÈTRE OPTIQUE

(43) Date of publication of application: 23.06.2021
(73) Proprietor: Universität Potsdam, 14469 Potsdam (DE)
(72) Inventor: POLLEY, Nabarun, 14476 Potsdam (DE); HASS, Roland, 14473 Potsdam (DE); REICH, Oliver, 14471 Potsdam (DE)
(74) Representative: Bittner, Thomas L.

(56) References cited:
- US-A1- 2009 326 385
- US-A1- 2010 284 004
- US-A1- 2017 273 671

## Description

### Field of the invention

The invention relates to a measuring arrangement for an optical spectrometer, in particular a photon density wave spectrometer.

### Background

Generally, spectrometers are measuring or analysis devices for the spectroscopic investigation of a substance, such as a fluid. Optical spectrometers use light for the spectroscopic investigation. Optical waveguide elements are provided for receiving excitation light from a light source, conducting it to an outlet of the optical waveguide element and emitting the excitation light into the substance to be analyzed. Measurement light caused by the excitation light emitted into the substance is received by the same of another optical waveguide element and conducted towards a detection device of the optical spectrometer.

A specific type of optical spectroscopy is the so-called photon density wave spectroscopy, which is particularly suitable for quantitative spectroscopic analysis of strongly scattering media with relatively low absorption, such as opaque dispersions. A photon density wave spectrometer is known e.g. from WO 2009/040055 A1.

Spectroscopic investigations with photon density waves permit the separate absolute determination of absorption and scattering properties of strongly scattering samples, which is not possible with conventional methods of light scattering or of absorption spectroscopy. The term "photon density waves" means the time- and space-dependent propagation of light in a strongly scattering medium, which is characterized by the number of photons per volume, i.e. the photon density. A strongly scattering medium may be a dispersion, in which physical and chemical processes shall be analyzed. For instance, reactions during polymerization of copolymers, enzymatic processes in milk and beer, etc. may be subject to analysis by means of a photon density wave spectrometer. Photon density wave spectroscopy is particularly useful for measuring fluids in the food industry, cosmetic industry, dairy industry, polymer industry, beer industry or biodiesel industry.

Particularly in large-scale industry systems, e.g. in physical, chemical or biological systems, it is desirable to provide exact analysis results throughout the entire system even in spatially distributed spectroscopic analysis. However, the processing environment, such as large industry vessels often exhibit limited and confined access geometries for inserting spectroscopic probes. For instance, there may be a very limited number of access ports (such as only one), which may be very small. This problem may be remedied by sampling material from several positions within the system and further analysis outside the system, i.e. by single-point measurements. However, mistakes may be made during sampling and changes may occur in the substance to be measured due to erroneous sampling. Apart from that, no real-time analysis is possible, and the analysis may be incomplete.

US2009/326385 A1 and US2017/273671 A1 disclose measuring arrangements for optical spectrometers, comprising waveguide elements having lateral outlets.

### Summary

An object of the invention is to provide a measuring arrangement for an optical spectrometer, in particular a photon density wave spectrometer, which allows for improved optical analysis of systems with limited and confined access geometries, in particular large-scale systems.

This problem is solved according to the invention with a measuring arrangement for an optical spectrometer as well as an optical spectrometer with the features of the independent claims. Preferred embodiments are the subject of dependent claims.

According to an aspect, a measuring arrangement for an optical spectrometer is provided, which comprises a plurality of optical waveguide elements. The optical waveguide elements extend along a longitudinal direction from a proximal end to a distal end, wherein the distal end is configured to be placed in a substance to be measured, such as a fluid, e.g. dispersion as described above. Each of the optical waveguide elements is configured for receiving excitation light from a light source at the proximal end and for emitting the excitation light into the substance to be measured at an outlet at the distal end and/or for receiving measurement light caused by the excitation light emitted into the substance and for conducting the measurement light towards the proximal end to a detection device. The outlet of at least one of, preferably each of the plurality of optical waveguide elements is formed laterally relative to the longitudinal direction such that the excitation light is emitted from the outlet in an emitting direction transverse to the longitudinal direction and/or measurement light is received in a receiving direction transverse to the longitudinal direction.

According to another aspect, an optical spectrometer, preferably a photon density wave spectrometer is provided, which comprises a light source, a detection device and the measuring arrangement.

The lateral emission and/or detection of light allows for an enlarged measuring space, while the outer dimensions of the measuring arrangement can be kept at a minimum. In particular compared to known measuring arrangements, in which the outlets of the optical waveguide elements face in an axial, i.e. the longitudinal direction, such known arrangements will be large in diameter to be able to cover a large measuring space.

In order to achieve the lateral outlets a normal optical waveguide element, i.e. having its outlet at an axial end-face, may be chemically and/or mechanically manipulated. The distal end of the optical waveguide element is covered with an opaque coating, e.g. a color or polymer matrix. The lateral outlet is then created by creating a lateral opening in the opaque coating, possibly including an outer lateral layer of the optical waveguide element. Generally, the lateral outlet may have any size and shape, in particular any axial extension. However, the outlet is preferably point-shaped, corresponding to a diameter of the optical waveguide element. It can also be envisaged that the outlets of the optical waveguide elements are formed by optical elements, which then form the direct outlet for the optical waveguide element, through which the excitation light exits or the measurement light enters. Such optical elements may comprise for example lenses or lens systems.

The emitting direction or directions may be perpendicular to the longitudinal direction. However, it may be envisioned that the emitting and longitudinal direction enclose any angle greater than 0 degrees, preferably up to 90 degrees, for instance any angle from 45 to 90 degrees. While the longitudinal direction may refer to the longitudinal direction of an individual optical waveguide element, it will be appreciated that a general longitudinal direction of the measurement arrangement may be referred to, particularly if the optical waveguide elements run substantially parallel relative to each other.

Independent of the arrangement of the outlets, the optical waveguide elements may be arranged in a bundle side by side. The plurality of optical waveguide elements, and thus the bundle, may comprise at least two optical waveguide elements, such as more than two, e.g. 8, 9, 10 or 12 optical waveguide elements. The bundle arrangement also contributes to a compact design, in particular with respect to transverse dimension or outer diameter. For instance, the measuring arrangement may have a diameter of less than 20 mm, less than 10 mm or even less than 5 mm.

In a preferred embodiment at least some of, preferably each of of the outlets of the plurality of optical waveguide elements are arranged at different distances relative to a reference level transversely to the longitudinal direction. In other words, the outlets may be formed offset relative to one another along the longitudinal direction. It can also be envisaged that at least two of the outlets are arranged at the same distance from the reference level, whereas at least one other outlet is displaced relative to this.

In a preferred embodiment, it may be envisioned that the outlets are arranged in a three-dimensional arrangement, such that in each spatial direction at least two of the outlets are offset or spaced apart from each other. The three-dimensional arrangement may be seen as a three-dimensional matrix, in which the outlets are distributed in each of the x-, y-, and z-directions. The spatial directions (i.e. particularly x, y, and z) may also be defined as comprising a longitudinal direction, a first lateral direction perpendicular to the longitudinal direction, and a second lateral direction perpendicular to the longitudinal direction and the first lateral direction. Such arrangement may further improve the coverage of a desired measuring space around the outlets while keeping the outer dimensions of the measuring arrangement compact.

In an embodiment, the outlets may be arranged such they face substantially in the same direction. In other words, the emitting (and/or receiving) directions may be parallel. Alternatively, at least some or all of the outlets may face in different directions. The directions of the outlets, i.e. the emitting directions of the light, define the measuring space and may depend on the desired spectroscopic analysis.

According to a preferred embodiment, the optical waveguide elements may be arranged around a central axis, wherein each of the outlets faces away from the central axis in a radial direction. More specifically, the optical waveguide elements may be arranged in a circular arrangement around a central axis. In particular if the outlets are positioned at different distances from a reference level as described above, a measuring arrangement with particularly compact dimensions may be provided. The distances may increase in a circumferential direction such that the outlets are arranged in a spiral arrangement.

The outlets may be arranged in at least one group to form at least one sensing zone for measuring a substance in a measuring space around the at least one sensing zone. This measuring space may be a continuous measuring space. In view of the aforementioned, depending on the spatial distribution and orientation of the outlets a desired measuring space can be specified by a sensing zone. The sensing zone may be arranged in a head of a measuring probe.

In a preferred embodiment a measuring arrangement is provided, in which the outlets are arranged in at least two groups to form at least two sensing zones for measuring a substance in at least two distinct measuring spaces around the respective sensing zone. Preferably, the sensing zones are spaced apart along the longitudinal direction. This is particularly useful for spatially distributed analysis of large-scale systems. A single probe can be inserted through an access port into a large vessel, wherein the probe has at least two sensing zones positioned along its length. This allows for real-time analysis of distinct measuring spaces within the system. Providing more than one sensing zone in an axially spaced apart arrangement is particularly made possible by providing optical waveguide elements with lateral outlets.

Advantageously, it can be provided that the outlets of the plurality of optical waveguide elements are fixed in their position relative to one another at least for a certain measurement configuration. The fixing of the outlets of the plurality of optical waveguide elements relative to one another can be designed to be permanent. Alternatively it can be envisaged that the outlets of the plurality of optical waveguide elements are movable relative to one another, for example by displacement, so that the relative positions between different measurements or even for different measuring steps within a measurement can be newly set, but are then in a fixed position. A displacement relative to one another of the outlets of the plurality of optical waveguide elements can for example be carried out by means of suitable translation slides, which in embodiments that are known per se can also achieve the necessary precision of said relative displacement.

In an embodiment, as a specific three-dimensional arrangement, the outlets of the plurality of optical waveguide elements may be positioned corresponding to a spiral-shaped arrangement in a longitudinal viewing direction. In particular, this may be a combination of a specific three-dimensional matrix arrangement with the outlets facing radially outwards as described above. Referring to the disclosure of WO 2009/040055 A1 it was found that a spiral-shaped arrangement of the outlets of the plurality of optical waveguide elements particularly supports efficient coupling-in of the excitation light and efficient coupling-out of the measurement light. Crosstalk effects between the plurality of optical waveguide elements can be minimized. Furthermore, the proposed arrangement of the plurality of optical waveguide elements supports a minimally disturbed light propagation in the substance to be measured by the optical waveguide or waveguides, which couple-in the excitation light, to the optical waveguide or waveguides which receive the measurement light. In this way the number of optical waveguides used can be increased, so that a large range of accessible distances is produced, with the result that it can be used for substances with very different optical properties.

Another embodiment can envisage that the optical waveguides are formed from optical waveguides with a graded-index profile. The use of optical waveguides with a graded-index profile makes it possible to reduce demodulation and hence improve the measurement light quality at higher frequencies of light modulation or the use of longer optical waveguides. A preferred further embodiment of the invention envisages that the optical waveguides are formed from photonic crystal fibers. For example, photonic crystal fibers of a so-called hollow-core design can be used.

In an advantageous embodiment of the invention it can be envisaged that the optical waveguides are produced according to at least one of the following designs: deuterated optical waveguides and fluorinated optical waveguides. The use of fiber-optic conductors with deuteration and/or a fluorination makes it possible to reduce absorption and therefore they can be used in a wider spectral range. Moreover, the reduced surface energy of fluorinated materials leads to less soiling of the optical waveguide and easier cleaning.

Optical waveguide elements can also be provided that incorporate a plurality of the aforementioned variants in any combination. It will be appreciated that the optical waveguide elements may be referred to as light guiding elements.

The optical spectrometer may comprise an optical switching device, wherein each of the optical waveguide elements of the measuring arrangement is switchably connected to the light source and the detection device, respectively, by means of the optical switching device, which is configured to connect the optical waveguide element with the light source or the detection device according to at least one selectable measurement configuration, so as to couple-in the excitation light into the substance to be measured corresponding to the at least one selectable measurement configuration and to receive the measurement light, wherein depending on the connection of each of the optical waveguide elements either excitation light or measurement light is conducted by the respective optical waveguide.

Depending on the measurement configuration, the plurality of optical waveguide elements can be set up by means of the optical switching device within the scope of a measuring task so that both the excitation light is coupled-in on the substance to be measured and the measurement light is coupled-out. For example, each of the plurality of optical waveguide elements can be used successively for coupling-in the excitation light and for receiving the measurement light, wherein the optical switching device provides a corresponding optical connection of the plurality of optical waveguide elements. As an alternative, it can also be provided that one of the plurality of optical waveguide elements is connected for the duration of the measurement for coupling-in of the excitation light, whereas some or all of the remaining optical waveguide elements serve for receiving measurement light and conveying it on to the detection device. A selected connection, which corresponds to one measurement configuration, can remain unaltered for the duration of a measurement that is to be performed. In another embodiment the measurement configuration changes once or plurality of times in the course of a measurement. Depending on the connection of the individual optical waveguide element, a particular type of light, namely excitation light or measurement light, is conducted by the associated optical waveguide.

Optical switching devices are known per se, for example in the form of fiber-fiber switches, with which fiber ends of optical waveguides can be positioned relative to one another so that a transfer of light from one fiber end into another fiber end either takes place or does not. Such optical switching devices use for example translation slides, to displace the fiber ends relative to one another. The proposed measuring arrangement can be implemented, depending on the particular application, using various optical switching devices.

### Brief description of the drawings

The invention is explained in more detail below with reference to the drawings, which schematically show preferred embodiments without the intention to limit the invention to the examples shown.
- Fig. 1: shows a schematic representation of a photon density wave spectrometer.
- Fig. 2: shows an optical waveguide element with lateral outlet.
- Fig. 3: shows a first embodiment of a measuring arrangement including a plurality of optical waveguide elements.
- Fig. 4: shows a second embodiment of a measuring arrangement including a plurality of optical waveguide elements.
- Fig. 5: shows an embodiment of a measuring arrangement with a plurality of sensing zones.

### Detailed description

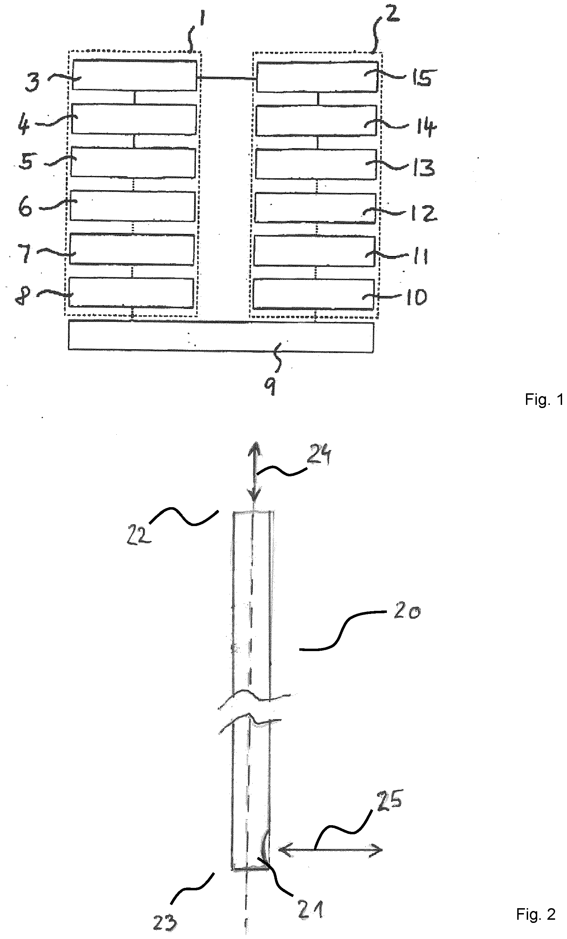

Fig. 1 shows a schematic representation of a photon density wave spectrometer (PDW-spectrometer) as an exemplary application for the measuring arrangement of the present invention. The dotted lines between the boxes relate to the transfer of optical signals, and continuous lines between the boxes relate to the transfer of electrical signals. While the measuring arrangement of the present invention may be particularly used with a PDW-spectrometer, it will be appreciated that it may be used for any type of optical spectrometer. Thus, the following description of the functionality of a PDW-spectrometer is provided as an example only and is in no way limiting for the concept of the measuring arrangement with optical waveguide elements with lateral outlets.

The spectrometer shown in Fig. 1 is divided conceptually into two parts, namely an emission unit 1 and a detection unit 2. By means of the emission unit 1, a time-dependent electrical signal, which for example has a sinusoidal shape, is produced using a frequency generator 3. The frequency generator 3 produces a modulated electrical signal at an adjustable frequency. The frequency is in the range from a few kilohertz up to a plurality of gigahertz.

By means of signal conditioning 4 on the emission side, the electrical signal obtained by the frequency generator 3 is conditioned and is fed to a light or radiation source 5 which can be modulated, and which converts the signal received into a time-dependent optical excitation light. Depending on the radiation source, the electrical signal is conditioned first. Along with possible amplification, a time-independent signal is added, in particular via a bias tee. If a plurality of radiation sources is to be modulated, an electronic high-frequency switch can be provided for controlled switching of the signal to the individual radiation sources.

The radiation source 5 that can be modulated is for example a laser, in particular one or more diode lasers. The intensity of the latter can be modulated directly via the laser current. Furthermore, the diode lasers are temperature-stabilized and their intensity is monitored by a monitor diode. The radiation source 5 is shielded against entry and exit of electromagnetic radiation.

The excitation light produced is fed, after conditioning by beam conditioning 6 on the emission side, via radiation transporting means 7 on the emission side, to a coupling-in device 8, whose time-dependent modulated excitation light is then coupled-in on a substance to be measured in a measuring space 9. While the measuring space 9 is shown as a box, it may be specifically a certain space within a large industry vessel and is particularly to be understood as being an open space without rigid boundaries, walls or the like. The dimensions of the measuring space 9 are particularly dependent on the substance to be measured, e.g. with regards to its light absorption properties.

The radiation is transported to the substance via optical waveguides. A slight demodulation, in particular at high frequencies, and a slight absorption at the corresponding wavelength, are taken into account. By means of the optical waveguides, it is possible to have considerable distances between the radiation source 5 and the substance in the measuring chamber 9. Use of optical waveguides with a graded-index profile or photonic crystal fibers, for example of hollow-core design, makes it possible to reduce the demodulation and therefore improve the measuring signal at higher frequencies or the use of longer optical waveguides. The use of fluorinated and/or deuterated fiber-optic conductors makes it possible to reduce the absorption and therefore give a wider spectral range of use. Moreover, the decreased surface energy of fluorinated materials results in less soiling of the optical waveguides and easier cleaning.

In the detection unit 2, measurement light, which is produced in the substance owing to the coupling-in of the time-dependent excitation light, is coupled-out by means of a coupling-out device 10, which in its turn is of integrated design, being integrated with the coupling-in device 8, and is conducted via radiation transporting means 11 on the detection side to a beam conditioning 12 on the detection side and then to a detector 13. The coupling-out from the substance once again takes place via one or more optical waveguides. These may be switched, via an optical switch, to a common optical waveguide or their position in the substance is altered appropriately by means of a translation slide. The further transport of radiation from the substance takes place via an optical waveguide. The above explanations of the radiation transport of the excitation light to the substance apply correspondingly.

The measurement light radiation to be detected is further conditioned in accordance with the requirements of the particular application. Thus, in addition to spectral filtering by means of an (interference) filter, it can also be split by means of dichroic mirrors onto a plurality of detectors. For this, usually the optical signal from the optical waveguide is first parallelized via a lens (not shown).

The measurement light received is finally converted by detector 13 into an electrical measuring signal, which in its turn is then conditioned by means of a signal conditioning on the detection side, and it is finally fed to a phase-sensitive detector 15. Depending on the spectral region and other conditions, the optical signal is converted to an electrical signal via avalanche or PIN diodes or photomultipliers. Apart from the temporal resolution and spectral sensitivity, a further linear region, little amplitude-phase crosstalk and good electromagnetic screening are necessary. A high-pass filter removes the time-independent component from the electrical signal of the detector 13 and the latter is amplified by a high-frequency amplifier, which is carried out by a signal conditioning 14 on the detection side. The time-independent signal can be evaluated additionally. The phase-sensitive detector 15 determines the amplitude and phase of the detected signal relative to the signal that the frequency generator 3 produces. The frequency generator 3 and phase-sensitive detector 15 are combined in a network analyzer.

Individual components of the measuring instrument in Fig. 1 can be controlled by a personal computer, which is also used for performing further evaluation of the measuring signals, so that finally an optical absorption coefficient and an effective optical scattering coefficient can be determined. From these it is also possible to determine other substance parameters such as particle concentration or particle size.

The individual optical waveguide elements corresponding to the particular measurement configuration may be used by means of corresponding connection, which in turn may be effected with an optical switching device (not shown), for example a fiber-fiber switch. For example an internal optical waveguide can be used for coupling-in of the excitation light, whereas the remaining optical waveguides serve for receiving the measurement light. A reversed design can also be envisaged. Furthermore, the plurality of optical waveguides can be used in succession as optical waveguides for the excitation light and optical waveguides for the measurement light. The optical switch providing the various measurement configurations can for example be effected using a translation slide. Various embodiments of said optical switching devices are known per se.

Fig. 2 shows an example of an optical waveguide element 20 with lateral outlet 21 to be used on the one hand for coupling-in the excitation light onto the substance to be investigated and on the other hand also for coupling-out the measurement light produced in the substance from these and then feed it to the detector 13. It will be appreciated that at least two, such as a bundle of 8, 9, 10 or 12 waveguide elements 20 may be provided, the outlets 21 of which are grouped e.g. in a three-dimensional spatial relationship to form a sensing zone 30, 40 as will be described in more detail below. The optical waveguide element 20 extends along a longitudinal direction 24 and has a proximal end 22 for receiving the excitation light from the radiation source 5 and/or for feeding the measurement light to the detector 13 as well as a distal end 23 to be immersed into the substance to be measured. At the distal end 23 or near the distal end 23, the lateral outlet 21 is provided to emit the excitation light into an emitting direction 25 which is transverse, preferably perpendicular to the longitudinal direction 24.

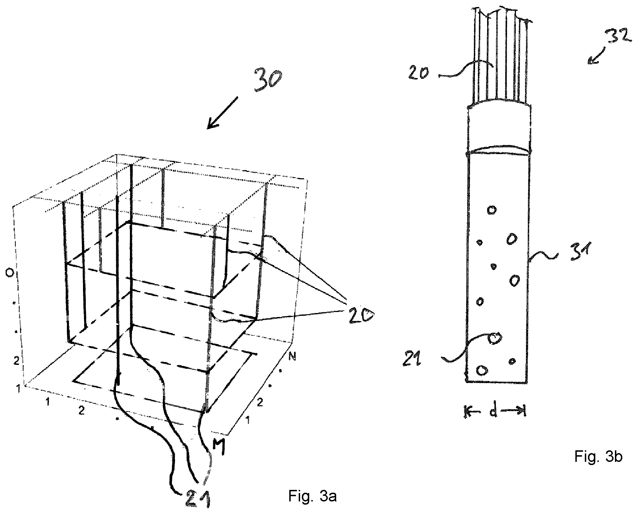

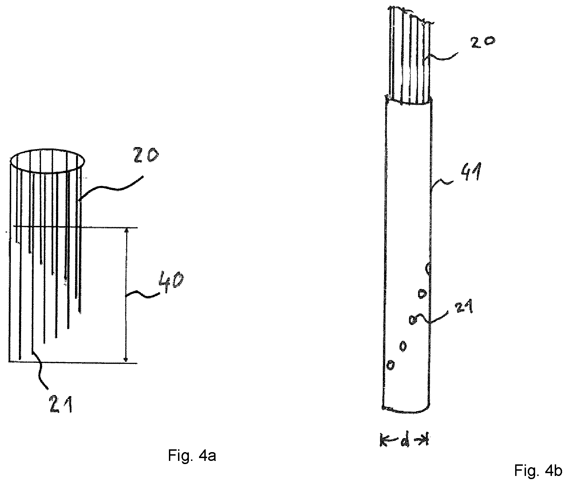

As mentioned above, a group of outlets 21 may form a sensing zone 30, which is configured to analyze a substance within a continuous measuring space 9, e.g. inside a container. In order to achieve desired size and dimension of a measuring space 9, a sensing zone 30 may include at least two outlets 21, preferably a plurality of outlets 21, such as at least 8, e.g. 10 or 12. Fig. 3 and Fig. 4 show different arrangements to form a sensing zone 30, 40. It will be appreciated that features of the arrangements shown in Fig. 3 and Fig. 4 may be combined.

As shown in Fig. 3a, the optical waveguide elements 20 may be arranged in a bundle such that their outlets 21 are arranged in a three-dimensional matrix. In other words, the outlets 21 are spatially distributed in an arrangement in all spatial directions, i.e. x-, y- and z-directions. This allows a variety of different distances between the outlets 21 in space and distances to a substance to be measured in a measuring space 9 around the sensing zone 30. All of the outlets 21 may face in the same direction. This three-dimensional arrangement allows for an accurate analysis of the measuring space 9 around the sensing zone 30, while at the same time providing an arrangement with small outer dimensions. The sensing zone 30 may be comprised in a head 31 of a measuring probe 32 as shown in Fig. 3b, which may have an outer diameter of e.g. 12 mm.

As shown in Fig. 4a, the optical waveguide elements 20 may be arranged in a circular arrangement around a common central axis that extends along the longitudinal direction. With regards to a circumferential direction, the optical waveguide elements 20 may terminate at different levels, with their length increasing in a circumferential direction. Thus the outlets 21 may be positioned in an arrangement which has a spiral shape. The outlets 21 may face radially outwards. This spiral arrangement allows for an even compacter design of a probe head 41 (see Fig. 4b), with an outer diameter of e.g. 8 mm, while provide an enlarged sensing zone 40 and thus enlarged measuring space 9 around the sensing zone 40.

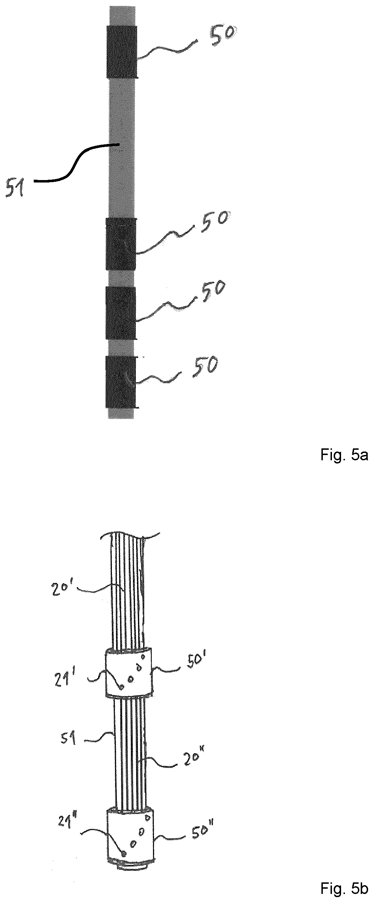

Fig. 5a schematically shows an embodiment of a measuring probe 51 having a plurality of sensing zones 50, such as the aforementioned sensing zones 30 and/or 40. The sensing zones 50 are axially spaced apart along the longitudinal direction such that they can be spatially distributed throughout a large industry vessel through a single opening through which the measuring probe 51 is inserted into the vessel. This is made possible by the lateral arrangement of the outlets 21. As can be seen particularly in Fig. 5b, a first group of optical waveguide elements 20' terminates with their outlets 21' in an upper sensing zone 50', while a second group of optical waveguide elements 20" passes by the upper sensing zone 50' and terminates with their outlets 21" in a lower sensing zone.

## Claims

1. A measuring arrangement for an optical spectrometer, the optical spectrometer comprising a light source (5) and a detection device (13), the measuring arrangement comprising a plurality of optical waveguide elements (20) extending along a longitudinal direction (24) from a proximal end (22) to a distal end (23), the distal end (23) configured to be placed in a substance to be measured,
- wherein each of the optical waveguide elements (20) is configured for receiving excitation light from the light source (5) of the optical spectrometer at the proximal end (22) and for emitting the excitation light into the substance at an outlet (21) at the distal end (23) and/or for receiving measurement light caused by excitation light emitted into the substance and for conducting the measurement light towards the proximal end (22) to the detection device (13) of the optical spectrometer,
- wherein the outlet (21) of at least one of the plurality of optical waveguide elements (20) is formed laterally relative to the longitudinal direction (24) such that excitation light is emitted from the outlet (21) in an emitting direction (25) transverse to the longitudinal direction (24) and/or measurement light is received in a receiving direction (25) transverse to the longitudinal direction (24).
**characterized in that** the distal end (23) of the at least one optical waveguide element (20) is covered with an opaque coating, and said outlet (21) is provided as a lateral outlet (21) at or near the distal end (23) formed as a lateral opening in the opaque coating.

2. The measuring arrangement according to claim 1, wherein the outlet (21) of each of the optical waveguide elements (20) is formed laterally relative to the longitudinal direction.

3. The measuring arrangement according to claim 1 or 2, wherein the emitting direction (25) and/or receiving direction is substantially perpendicular to the longitudinal direction (24).

4. The measuring arrangement according to any one of the preceding claims, wherein at least some of the outlets (21) of the plurality of optical waveguide elements are arranged at different distances relative to a reference level transversely to the longitudinal direction (24).

5. The measuring arrangement according to any one of the preceding claims, wherein the outlets (21) are arranged in a three-dimensional arrangement, such that in each spatial direction at least two of the outlets (21) are offset from each other.

6. The measuring arrangement according to any one of the preceding claims, wherein the outlets (21) are arranged such they face substantially in the same direction.

7. The measuring arrangement according to any one of claims 1 to 4, wherein the optical waveguide elements (20) are arranged around a central axis that extends in the longitudinal direction (24), wherein each of the outlets (21) faces in a direction away from the central axis.

8. The measuring arrangement according to claim 7, wherein the optical waveguide elements (20) are arranged in a circular arrangement around the central axis, wherein each of the outlets (21) faces away from the central axis in a radial direction.

9. The measuring arrangement according to claim 7 or 8, wherein the outlets (21) are arranged at different distances relative to a reference level transversely to the longitudinal direction (24), wherein the distances increase in a circumferential direction such that the outlets (21) are arranged in a spiral arrangement.

10. The measuring arrangement according to any one of the preceding claims, wherein the outlets (21) are arranged in at least one group to form at least one sensing zone (30; 40) for measuring a substance in a measuring space (9) around the at least one sensing zone (30; 40).

11. The measuring arrangement according to any one of the preceding claims, wherein the outlets (21) are arranged in at least two groups to form at least two sensing zones (50) for measuring a substance in at least two distinct measuring spaces (9) around the sensing zones (50).

12. The measuring arrangement according to claim 11, wherein the sensing zones (50) are spaced apart along the longitudinal direction (24).

13. An optical spectrometer, comprising a light source (5), a detection device (13) and the measuring arrangement of any one of the preceding claims.

14. The optical spectrometer according to claim 13, further comprising an optical switching device, wherein each of the optical waveguide elements (20) of the measuring arrangement is switchably connected to the light source (5) and the detection device (13), respectively, by means of the optical switching device, which is configured to connect the optical waveguide element (20) with the light source (5) or the detection device (13) according to at least one selectable measurement configuration, so as to couple-in the excitation light into the substance to be measured corresponding to the at least one selectable measurement configuration and to receive the measurement light, wherein depending on the connection of each of the optical waveguide elements (20) either excitation light or measurement light is conducted by the respective optical waveguide element (20).

15. The optical spectrometer according to claim 13 or 14, configured as a photon density wave spectrometer.

## Patentansprüche

1. Messanordnung für ein optisches Spektrometer, wobei das optische Spektrometer eine Lichtquelle (5) und eine Detektionsvorrichtung (13) aufweist, wobei die Messanordnung mehrere optische Wellenleiterelemente (20) aufweist, die sich entlang einer Längsrichtung (24) von einem proximalen Ende (22) zu einem distalen Ende (23) erstrecken, wobei das distale Ende (23) dazu eingerichtet ist, in einer zu messenden Substanz platziert zu werden,
- wobei jedes der optischen Wellenleiterelemente (20) dazu eingerichtet ist, am proximalen Ende (22) Anregungslicht von der Lichtquelle (5) des optischen Spektrometers zu empfangen und an einem Austritt (21) am distalen Ende (23) das Anregungslicht in die Substanz zu emittieren und/oder Messlicht zu empfangen, das durch in die Substanz emittiertes Anregungslicht verursacht wird, und das Messlicht zum proximalen Ende (22) zur Detektionsvorrichtung (13) des optischen Spektrometers zu leiten,
- wobei der Austritt (21) von mindestens einem der mehreren optischen Wellenleiterelemente (20) seitlich in Bezug auf die Längsrichtung (24) derart ausgebildet ist, dass Anregungslicht von dem Austritt (21) in einer Emissionsrichtung (25) quer zur Längsrichtung (24) emittiert wird und/oder Messlicht in einer Empfangsrichtung (25) quer zur Längsrichtung (24) empfangen wird,
**dadurch gekennzeichnet, dass** das distale Ende (23) des mindestens einen optischen Wellenleiterelements (20) mit einer lichtundurchlässigen Beschichtung bedeckt ist und der Austritt (21) an oder nahe dem distalen Ende (23) als ein seitlicher Austritt (21) bereitgestellt ist, der als eine seitliche Öffnung in der lichtundurchlässigen Beschichtung ausgebildet ist.

2. Messanordnung nach Anspruch 1, wobei der Austritt (21) jedes der optischen Wellenleiterelemente (20) seitlich in Bezug auf die Längsrichtung ausgebildet ist.

3. Messanordnung nach Anspruch 1 oder 2, wobei die Emissionsrichtung (25) und/oder Empfangsrichtung im Wesentlichen senkrecht zur Längsrichtung (24) ist.

4. Messanordnung nach einem der vorhergehenden Ansprüche, wobei mindestens einige der Austritte (21) der mehreren optischen Wellenleiterelemente in unterschiedlichen Abständen in Bezug auf eine Bezugsebene quer zur Längsrichtung (24) angeordnet sind.

5. Messanordnung nach einem der vorhergehenden Ansprüche, wobei die Austritte (21) in einer dreidimensionalen Anordnung angeordnet sind, so dass in jeder Raumrichtung mindestens zwei der Austritte (21) gegeneinander versetzt sind.

6. Messanordnung nach einem der vorhergehenden Ansprüche, wobei die Austritte (21) derart angeordnet sind, dass sie im Wesentlichen in die gleiche Richtung weisen.

7. Messanordnung nach einem der Ansprüche 1 bis 4, wobei die optischen Wellenleiterelemente (20) um eine Mittelachse angeordnet sind, die sich in der Längsrichtung (24) erstreckt, wobei jeder der Austritte (21) in eine Richtung weg von der Mittelachse weist.

8. Messanordnung nach Anspruch 7, wobei die optischen Wellenleiterelemente (20) in einer kreisförmigen Anordnung um die Mittelachse angeordnet sind, wobei jeder der Austritte (21) in einer radialen Richtung weg von der Mittelachse weist.

9. Messanordnung nach Anspruch 7 oder 8, wobei die Austritte (21) in unterschiedlichen Abständen in Bezug auf eine Bezugsebene quer zur Längsrichtung (24) angeordnet sind, wobei die Abstände in einer Umfangsrichtung derart zunehmen, dass die Austritte (21) in einer spiralförmigen Anordnung angeordnet sind.

10. Messanordnung nach einem der vorhergehenden Ansprüche, wobei die Austritte (21) in mindestens einer Gruppe angeordnet sind, um mindestens eine Erfassungszone (30; 40) zum Messen einer Substanz in einem Messraum (9) um die mindestens eine Erfassungszone (30; 40) zu bilden.

11. Messanordnung nach einem der vorhergehenden Ansprüche, wobei die Austritte (21) in mindestens zwei Gruppen angeordnet sind, um mindestens zwei Erfassungszonen (50) zum Messen einer Substanz in mindestens zwei verschiedenen Messräumen (9) um die Erfassungszonen (50) zu bilden.

12. Messanordnung nach Anspruch 11, wobei die Erfassungszonen (50) entlang der Längsrichtung (24) voneinander beabstandet sind.

13. Optisches Spektrometer, umfassend eine Lichtquelle (5), eine Detektionsvorrichtung (13) und die Messanordnung nach einem der vorhergehenden Ansprüche.

14. Optisches Spektrometer nach Anspruch 13, ferner umfassend eine optische Schaltvorrichtung, wobei jedes der optischen Wellenleiterelemente (20) der Messanordnung mittels der optischen Schaltvorrichtung schaltbar mit der Lichtquelle (5) oder der Detektionsvorrichtung (13) verbunden ist, wobei die optische Schaltvorrichtung dazu eingerichtet ist, das optische Wellenleiterelement (20) entsprechend mindestens einer auswählbaren Messkonfiguration mit der Lichtquelle (5) oder mit der Detektionsvorrichtung (13) zu verbinden, um das Anregungslicht entsprechend der mindestens einen auswählbaren Messkonfiguration in die zu messende Substanz einzukoppeln und das Messlicht zu empfangen, wobei in Abhängigkeit von der Verbindung eines jeweiligen der optischen Wellenleiterelemente (20) entweder Anregungslicht oder Messlicht durch das jeweilige optische Wellenleiterelement (20) geleitet wird.

15. Optisches Spektrometer nach Anspruch 13 oder 14, eingerichtet als Photonendichtewellenspektrometer.

## Revendications

1. Dispositif de mesure pour spectromètre optique, le spectromètre optique comprenant une source lumineuse (5) et un dispositif de détection (13), le dispositif de mesure comprenant une pluralité d'éléments à guide d'ondes optiques (20) s'étendant dans un sens longitudinal (24) d'une extrémité proximale (22) à une extrémité distale (23), l'extrémité distale (23) étant configurée pour être placée dans une substance à mesurer, dans lequel
- chacun des éléments à guide d'ondes optiques (20) étant configuré pour recevoir de la lumière d'excitation de la source lumineuse (5) du spectromètre optique à l'extrémité proximale (22) et pour émettre la lumière d'excitation dans la substance à une sortie (21) à l'extrémité distale (23) et/ou pour recevoir de la lumière de mesure due à la lumière excitation émise dans la substance et pour conduire la lumière de mesure vers l'extrémité proximale (22) jusqu'au dispositif de détection (13) du spectromètre optique ;
- la sortie (21) d'au moins un de la pluralité d'éléments à guide d'ondes optiques (20) étant pratiquée latéralement par rapport au sens longitudinal (24), de sorte que de la lumière excitation est émise par la sortie (21) dans un sens d'émission (25) transversal au sens longitudinal (24) et/ou que de la lumière de mesure est reçue dans un sens de réception (25) transversal au sens longitudinal (24),
**caractérisé en ce que** l'extrémité distale (23) de l'au moins un élément à guide d'ondes optiques (20) est couverte d'un revêtement opaque, et que ladite sortie (21) est prévue sous forme d'une sortie latérale (21) à ou à proximité de l'extrémité distale (23) pratiquée sous forme d'une ouverture latérale dans le revêtement opaque.

2. Dispositif de mesure selon la revendication 1, dans lequel la sortie (21) de chacun des éléments à guide d'ondes optiques (20) est pratiquée latéralement par rapport au sens longitudinal.

3. Dispositif de mesure selon la revendication 1 ou 2, dans lequel le sens d'émission (25) et/ou le sens de réception est substantiellement perpendiculaire au sens longitudinal (24).

4. Dispositif de mesure selon l'une quelconque des revendications précédentes, dans lequel au moins certaines des sorties (21) de la pluralité d'éléments à guide d'ondes optiques sont disposées à des distances différentes par rapport à un niveau de référence transversalement au sens longitudinal (24).

5. Dispositif de mesure selon l'une quelconque des revendications précédentes, dans lequel les sorties (21) sont disposées en agencement tridimensionnel, de sorte que, dans chaque sens spatial, au moins deux des sorties (21) sont décalées l'une de l'autre.

6. Dispositif de mesure selon l'une quelconque des revendications précédentes, dans lequel les sorties (21) sont disposées de manière à être tournées substantiellement dans le même sens.

7. Dispositif de mesure selon l'une quelconque des revendications 1 à 4, dans lequel les éléments à guide d'ondes optiques (20) sont disposés autour d'un axe central qui s'étend dans le sens longitudinal (24), chacune des sorties (21) étant orientée dans un sens détourné de l'axe central.

8. Dispositif de mesure selon la revendication 7, dans lequel les éléments à guide d'ondes optiques (20) sont disposés en agencement circulaire autour de l'axe central, chacune des sorties (21) étant orientée dans un sens détourné de l'axe central dans un sens radial.

9. Dispositif de mesure selon la revendication 7 ou 8, dans lequel les sorties (21) sont disposées à des distances différentes par rapport à un niveau de référence transversalement au sens longitudinal (24), les distances augmentant dans un sens circonférentiel de manière à ce que les sorties (21) soient disposées en agencement en spirale.

10. Dispositif de mesure selon l'une quelconque des revendications précédentes, dans lequel les sorties (21) sont disposées en au moins un groupe pour former au moins une zone de détection (30 ; 40) pour mesurer une substance dans un espace de mesure (9) autour de l'au moins une zone de détection (30 ; 40).

11. Dispositif de mesure selon l'une quelconque des revendications précédentes, dans lequel les sorties (21) sont disposées en au moins deux groupes pour former au moins deux zones de détection (50) pour mesurer une substance dans au moins deux espaces de mesure distincts (9) autour des zones de détection (50).

12. Dispositif de mesure selon la revendication 11, dans lequel les zones de détection (50) sont espacées dans le sens longitudinal (24).

13. Spectromètre optique, comprenant une source lumineuse (5), un dispositif de détection (13) et le dispositif de mesure selon l'une quelconque des revendications précédentes.

14. Spectromètre optique selon la revendication 13, comprenant en outre un dispositif de commutation optique, chacun des éléments à guide d'ondes optiques (20) du dispositif de mesure étant connecté de manière commutable à la source lumineuse (5) et au dispositif de détection (13) respectivement au moyen du dispositif de commutation optique, qui est configuré pour connecter l'élément à guide d'ondes optiques (20) à la source lumineuse (5) ou au dispositif de détection (13) en fonction d'au moins une configuration de mesure sélectionnable de manière à incorporer la lumière d'excitation dans la substance à mesurer correspondant à l'au moins une configuration de mesure sélectionnable et à recevoir la lumière de mesure, sachant que, en fonction de la connexion de chacun des éléments à guide d'ondes optiques (20), soit de la lumière excitation, soit de la lumière de mesure est conduite par l'élément à guide d'ondes optiques respectif (20).

15. Spectromètre type selon la revendication 13 ou 14, configuré sous forme d'un spectromètre à ondes de densité de photons.
